Europäisches Patentamt

European Patent Office

Office européen des brevets

(11) Publication number: **0 315 837**
**A2**

## (12) EUROPEAN PATENT APPLICATION

(21) Application number: **88117963.4**

(51) Int. Cl.⁴: **B60K 17/08 , F16H 37/04**

(22) Date of filing: **28.10.88**

(30) Priority: **12.11.87 IT 2260987**

(43) Date of publication of application:
**17.05.89 Bulletin 89/20**

(84) Designated Contracting States:
**DE ES FR GB SE**

(71) Applicant: **S.I.S.T.A. S.r.L.**
**Corso Galileo Ferraris, 138**
**I-10120 Torino(IT)**

(72) Inventor: **Morelli, Alberto, Prof.**
**Strada Valsalice, 76**
**I-10131 Torino(IT)**

(74) Representative: **Jaumann, Paolo**
**Studio Brevetti Jaumann S.n.c. Piazza**
**Castello, 2**
**I-20121 Milano(IT)**

(54) New transmission particularly for motor vehicles.

(57) In order to obtain a very high transmission efficiency, in at least two gears, preferably in the top gears, a direct drive is fitted utilizing a plurality of gear couplings in the final drive, the gearbox being excluded.

EP 0 315 837 A2

## NEW TRANSMISSION PARTICULARLY FOR MOTOR VEHICLES

As it is well known, the motor vehicle's gearbox provides a plurality of transmission ratios in order to adequate the velocity of the wheel's revolution to the most convenient velocity of revolution of the engine shaft. For example, the transmission ratios in the manual 5 speed gearbox of a medium size european car may range from 14 to 3.5 as indicated in column 1 or table 1. These overall transmission ratios are partially obtained in the final drive, where the transmission ratio is fixed (usually in the order of 4).

From column 2 of Table 1 it can be observed that the ratio of adjacent transmission ratios varies from 1.59 (from 1st to 2nd gear) to 1.29 (from 4th to 5th gear). The fact that the ratio of transmission ratios is not constant (i.e. not in geometric progression) is depending on the variations of the so called equivalent mass $m_{ai}$ of the vehicle, taking into account the effect of rotating masses. Column 3 of Table 1 gives the values of the equivalent mass and column 5 the same mass in the case that the flywheel of the engine is not considered. It can be observed that in this last case the variation of the equivalent mass is very limited especially if the 1st gear is not considered. Therefore, the following conclusions can be drawn:
- The effect of the flywheel on the equivalent mass is fundamental.
- If the flywheel is disconnected from the engine shaft, namely is free to rotate independently, the ratio of the adjacent transmission ratios must be approximately constant (except the first gear), as for instance is shown in columns 6 and 7.

Of course, a reduction of the equivalent mass is favorable resulting in an increase of the vehicle's acceleration. Therefore it has been already proposed to disengage the flywheel from the crankshaft except for idling when the flywheel is necessary to assure the continuous and regular rotation of the engine. In fact, when the transmission is active, the vehicle itself acts as a flywheel whose intertial effect is many times as much a conventional flywheel, depending on the gear engaged (this being about 4 times in the first gear and 80 times in the top gear).

In addition, it can he remarked that, in order to obtain the high transmission ratios of the low drives, at least two gear couplings are required: one in the final drive, the other in the gearbox. This is not necessary, however, for the top speeds requiring a total transmission ratio in the order of 4.

In fact, some transmissions exist having the so called "direct drive": the top speed is obtained connecting the engine shaft directly to the final drive achieving a high transmission efficiency. In this case, however, the other speeds are obtained by adding to the final drive two other gear couplings in the gearbox resulting in a considerably low total efficiency of less than 90%.

In most cases, especially when the engine is transversal, no direct drive exists, any speed being obtained by combining appropriate reductions both in the gearbox and the final drive. The transmission losses give a good result in any speed but almost double with respect to a direct drive condition. An additional negative characteristic of this solution is concerned with the high space required transversally not allowing for the adoption of a 6 or even a 5 cylinders-in-line engine on a front drive - transverse engine layout.

The manual gearbox requires an interruption of the power transmission when a change of gear is operated with consequent loss of time in the order of 1 second together with a loss of energy. In addition, the manual gearbox requires attention and skill of the driver who must operate three different controls contemporaneously. However, the manual gearbox is still the best as regards the overall eficiency.

It would be desireable, therefore, to adopt even on a manual gearbox the so called "power shift" system eliminating both the time loss and the necessity to operate the clutch control.

Invention aims

The invention pursues the aim to realize a transmission system of a very high eficiency especially in the gears at which the highest powers are transmitted (IV and V). In addition:
- The mechanical solution is so compact that even a 6 cylinder-in-line engine can be adopted in the case of a front-drive /transverse-engine layout.
- The power - shaft system is adopted in changing gears.
- The engine flywheel is disengaged from its shaft when the transmission is activated in order to obtain higher vehicle accelerations.

According to the invention, the above mentioned aims are attained mainly by the fact that in at least two "gears" (or "speeds") especially in the top gears, a "direct-drive" is fitted between the input and output shafts of the gearbox so that the gearbox itself is by-passed in the power transmission, only the gears of the final drive being engaged resulting in a very high transmission efficiency.

Further advantages and characteristics of the invention can be drawn from the claims and by the following description of some examples shown in the enclosed drawings to which the invention, of course, is not limited.

Fig. 1 illustrates a section through the shafts axis of a first example concerned with the transverse engine layout.

Fig. 2 regards the same solution of Fig. 1 in a transverse section, with respect to the shaft's axis.

Fig. 3 shows three different solutions concerning the front-engine/rear-drive transmission layout.

Fig. 4 illustrates an additional solution.

First example of solution

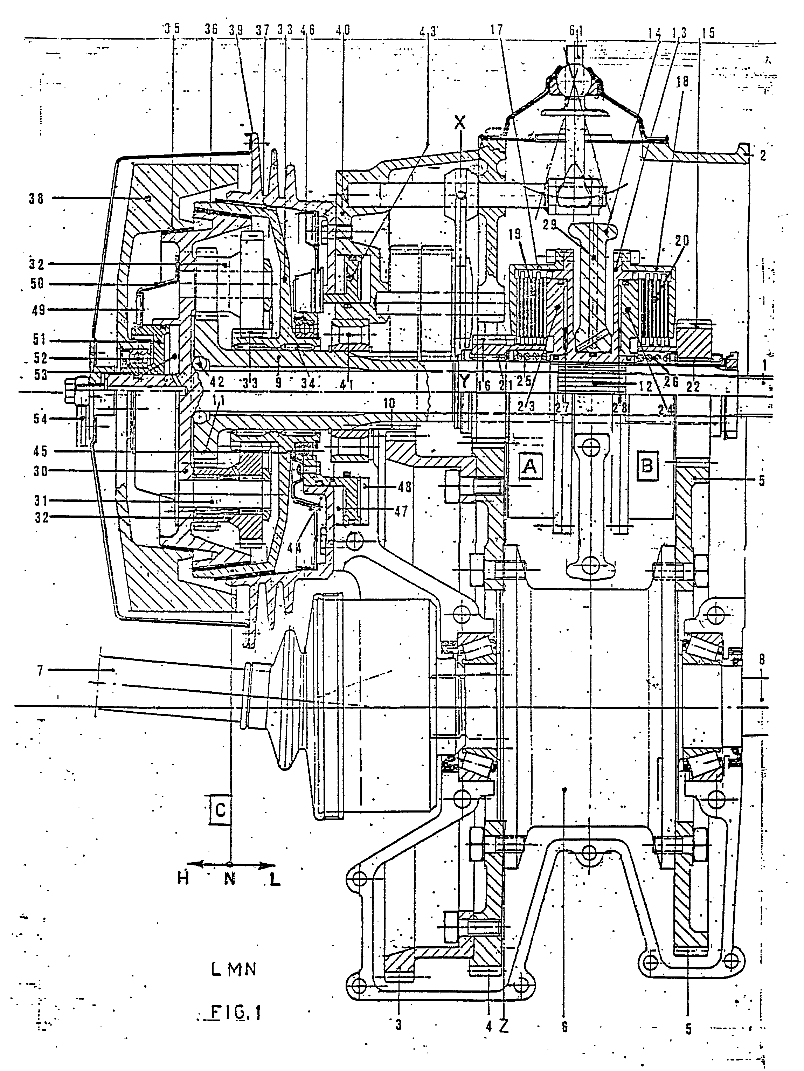

With reference to Fig. 1 the engine shaft is connected either directly or by the intermediate of a damping joint to the input shaft 1. The damping joint is not represented but it is worthy to remark that it can be designed differently from those fitted in the hub of clutch disc, as it is usually, because it is not required to be high temperature resistant. The case 2 of the gearbox is in most cases stiffly connected to the engine case. It includes also the final drives with the ring gears 3, 4 and 5 corresponding respectively to:

1 st and reverse gear (RM)

2 nd and 4 th gear

3 rd and 5 th gear

These large ring gears are bolted to the flanged case of the "differential" 6 from which the shafts 7 and 8 transmitting the motion to the wheels come out, as it is usually.

A second shaft 9, coaxial to 1, carries the gears 10 and 11 and the spline 12 through which the double flanged pivot 13 is driven. The pivot is supported by the fluid bearing 14 which contributes to the smooth, efficient and low-noise operation.

On the two flanges of the pivot 13 are bolted the corresponding flanges 17 and 18 internally grooved in order to drive the friction discs 19 and 20 of two wet multi-disc clutches having the role of connecting either the pinion 15 or the pinion 16 to the shaft 9. For this purpose, the discs are alternatively grooved externally to engage the flanges 17 and 18 and internally to engage the pinions 15 and 16 which are supported on the shaft 9 by the roll bearings 22 and 21 respectively. These bearings provide both radial and axial supports for the pinions.

On the body of the double flanged pivot 13 two hydraulically operated axial pistons 23 and 24 are located having the role of tightening the friction discs to engage the pinions to the shaft 9. The hydraulic pressure in cylinders 27 and 28 is led by oil through channels such as one can observe in case 29. The end of shaft 1 opposite to the engine shaft connection is flanged (30) and carries preferably three pivots 31 on which a twin sprocket gear 32 is mounted and free to rotate. One of the gears engages on the gear 11 of shaft 9 the other on the gear 33 of the homonimous wheel 33 which can both rotate and move axially on shaft 9 to which is supported by the roll bearing 34. Both carrier 30 and wheel 33 have conical external surfaces 35, 36 and 37 which are conjugated with each other (36), with the flywheel 38 (35) and with the drum 39 (37) fixed to the case 2. The case holds on its wall 40 a second support of the shafts, preferably a roll bearing 41. In addition, the shafts 1 and 9 are kept coaxial by means of the internal bearing 42. On the wall 40 an hydraulic cylinder is connected to the external ring of the bearing 45 by means of the extension 44 of the piston itself the internal ring of the bearing 45 being fixed to the wheel 33. The wheel 33 has a central position determined by the unbended configuration of the spring 46 which has its peripheral portion set to the drum 39. When the oil pressure is activated on the chambers 47 or 48 the piston 43 will move respectively to the right or to the left by overcoming the reaction of the spring 46. When the wheel 33 is pushed to the left, the conical clutch 36 is engaged and, after a certain amount of time depending on the force applied and the frictional characteristics of the linings bonded on wheel 33, both the shafts 1 and 9 will rotate at the same speed. In this condition, the blockage of either pinion 15 or 16 to the shaft 9 will result in the engagement of 4th or 5th speed respectively, i.e. the two top speeds. It is noted that no gear couplings are working except the final drive, the so called direct-drive is obtained resulting in a very high transmission efficiency (over 95%).

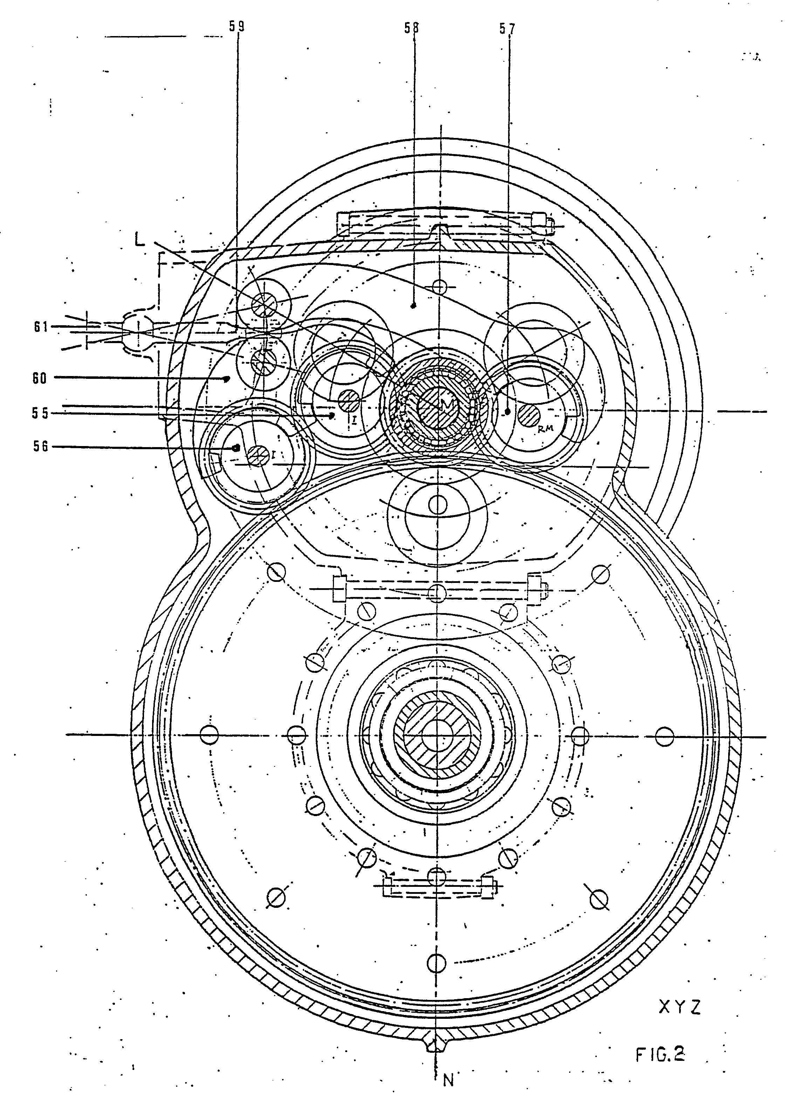

If the wheel 33 is pulled to the right its external conical lining will contact the internal conjugated conical surface of the drum 39. Again, depending on the force applied (hydraulically) and the frictional characteristics of the linings, after a certain time the wheel 33 will rotate together with its gear 33 on which the twin gear 33 will revolve driven by the pivot 31 of the carrier 30 enbodied to the shaft 1. The smaller gear of the twin geared sprocket 32 will therefore induce a smaller angular velocity to the gear 11 on shaft 9. In the example represented on Fig.1 and 2 the angular velocity ratio between shafts 1 and 9 or exactly 2 attaining therefore the transmission ratios listed in column 6 of table 1. In column 7 of table 1 the ratios of the contiguous transmission ratios from II to V gear are listed. It can be observed that they are equal to $\sqrt{2}$ = 1,414 and constant depending on the fact that the flywheel is not engaged to the engine when the transmission is working. For the purpose, the flywheel is coaxial with the wheel 30 and relevant shaft 1 being driven by the friction originating on the conical surfaces 35 is pushed together by the diaphragm spring 49.

The peripheral contour of this spring is fixed by the connection element 50 to the wheel 30, the internal contour being engaged to the hydraulic piston 51 moving axially and sealed inside a cylinder built-in on the hub. Piston and flywheel are axially and radially connected by the rolling bearings 52. Untill the oil pressure led to the chamber 53 by the channels 54 is zero the spring keeps the flywheel and the wheel 30 joined together. When the oil pressure exceeds a certain value the piston 51 overcomes the counteracting force of the spring and separates the flywheel from the driving shaft becoming free to rotate independently. Therefore, during the acceleration of the wehicle the flywheel is not submitted to acceleration resulting in a higher acceleration of the vehicle itself both in driving and braking conditions. This effect gets higher as the transmission speeds are lowered, as it is well known, attaining an order of magnitude of 20% or more in the lowest speeds maintaining a value of some percents in the highest speeds.

The first gear is commonly intended for performing special features, namely:

1 - parking manoeuvers

2 - inversion of running direction

3 - to comply with man pacing speeds and very low speed traffic situations

4 - overtaking steep positive (and negative) dives.

The power required is very low with the exception of point 4 that usually is performed in a short time. Consequently a high power transmission efficiency in the first gear (and reverse) is not fundamental.

Therefore, in the example here described, the first (I) and reverse (RM) speeds are obtained through the system of gears 55, 56, 57 freely rotating on their pivots as it can be clearly seen on Fig.2. The pinion 10 on shaft 9 does not engage with any of the already mentioned gears until the forks 58 or 60 for the engagement of RM and I respectively are moved axially by means of the conventional leverage system 59-61.

When the RM is engaged the power flows from gear 10 to the ring gear 3 by the intermediate of the sprocket gear 57 thus inverting the sense of motion. When the I is engaged the power flows from gear 10 to the ring gear 3 by the intermediate of the gears 55 and 56, always meshed one another and freely rotating on their pivots. Both in I and RM speeds the angular velocity of gear 10 is reduced with respect to the engine shaft velocity by engaging the conical clutch 37 which operates here as a starting clutch. How to operate in order to engage the various speeds is indicated in table 2.

The transmission performance is subdivided in three operating modes:

1 - Engine start (transmission in neutral position N)

2 - Manoeuver (engagement of I and RM gears)

3 - Exercize (engagement of II, III, IV and V gears).

Let us consider any operating mode separately:

## Engine start

When the engine is not rotating the oil pressure in the control circuits is zero i.e. at atmospheric pressure. On the other hand the flywheel must be engaged on the engine shaft in order to assure a correct engine idling. Therefore, the conical clutch 35 is engaged connecting the flywheel to the engine shaft by the action of the spring 49. Starting the engine can be made by conventional means such as an electrical DC motor not represented in the Figures -Starting could be also performed by disconnecting the flywheel and keeping it in rotation by means of a small electric motor at a speed high enough to start the engine when the flywheel is successively engaged again to its shaft.

## Manoeuver

It is worthwile to remember that in the engine starting condition the transmission has a double neutral position. In fact, both the conical clutches provided on wheel 33 are not engaged, the wheel being held in a mid position by the unbended spring 46.

This condition corresponds to a conventional manual transmission in neutral position with the clutch disengaged. It is therefore possible to engage any speed. For instance, by operating on the lever 61 it is possible to engage the I or RM speeds.

The second step in the operating mode is the gradual engagement of the conical clutch 37.

This operation will preferably be done by firstly displacing the accelerator pedal that will then induce the oil pressure on chamber 47 to increase in a proper way.

In the manoeuver operating mode the flywheel can remain engaged to the engine shaft in order to obtain a more regular operation. On the other hand, during the manoeuver operation a high acceleration performance is not required.

Exercize

It is the mode on which the engine power can be fully transmitted. Running preferably starts in II speed having a transmission ratio between the I and II gear of a conventional five speed transmission. It is worthwile to remember that in this gear the mass to be accelerated is about 20% less than in the conventional case, due to the disengagement of the flywheel. Therefore a lower transmission ratio can be adopted in the initial running phase. To engage the II speed the multidisc clutch A is activated, then, during the first stroke of the accelerator pedal the conical clutch C is pulled in the L position. The car starts running and the more the accelerator is pushed down in its second stroke the more the vehicle speeds up, as it is conventional. At the beginning of the second stroke the hydraulic control of the piston 51 is activated in order to disengage the flywheel. When an adequate speed is attained the transmission can go into the III gear by engaging the multidisc clutch B and by contemporaneously disengaging the multidisc clutch A, as it is usual in the "power shift" systems. The position of the accelerator can remain unchanged. Only the control lever is moved from point II to III. To shift from III to IV, the multidisc clutch A is again activated, the clutch B is disengaged and the clutch C simultaneously pushed in H: the first direct drive is introduced. To obtain the second direct driven, the V, it is necessary to operate as it was shown from II to III the difference being that the conical clutch remains in the H position.

As far as the flywheel is concerned, it is engaged to the shaft only when the control lever is positioned in the neutral point N, the accelerator being held in the first stroke position.

Variants

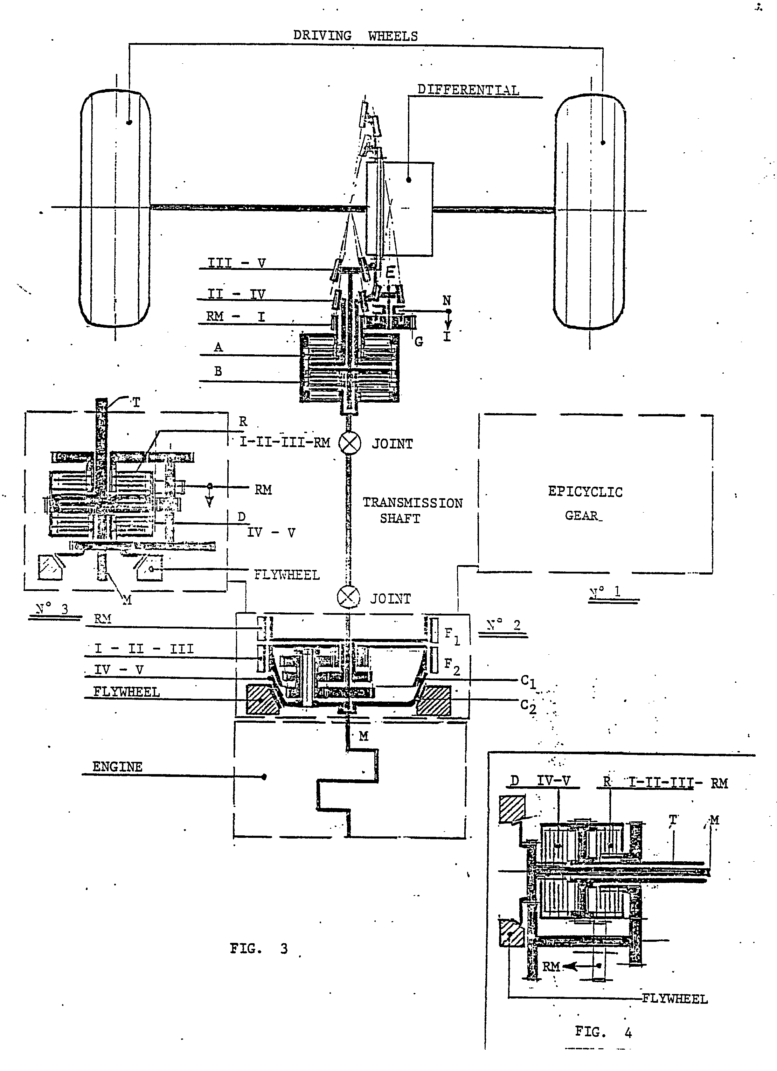

The solution shown above may have many variants retaining the main characteristics of the invention. Fig. 3 shows some of these concerned with the front-engine/rear-drive solution characterized by the longitudinal layout of the engine and transmission shafts.

On the axis of the driving wheels the final drive is fitted. On the differential case some ring bevel gears are fixed to which corresponding bevel pinions engage. In the specific case, two of these pinions are coaxial and connected to the transmission shaft by the engagement of the multidisc clutches A and B. The third pinion has a parallel axis on which a gear G, meshing another gear coaxial with the transmission shaft, can be fixed to the inner shaft in order to provide the transmission with a very high ratio as for the first speed. The connection of the transmission shaft to the engine is made by a wheelwork able to provide a direct drive and at least another transmission ration. In addition, it should be able to provide also the reverse motion. Three types of wheelworks are indicated on Fig.3.

The n.1 is a classic epicyclic train that will not be described as it is well known. However, in the case of motorcars it does not appear to be the most advisable when a ratio of two approximately is to be attained, requiring the adoption of bevel gears or the twin satellite solution.

The n.2 is a solution similar to that already seen in the case of the transverse engine layout, the only difference being that the input shaft is not inside the output shaft. In addition, the twin spur gear of the previous example is substituted by a three geared sprocket-wheel thus providing the reverse speed. This solution is similar to that adopted by Ford in the T-model the difference being mainly on the detachatle flywheel.

In solution n.3 the coaxial M and T, respectively driving and driven shafts can be blocked together by the engagement of the multidisc clutch D in order to provide the direct drive IV and V. In addition, on a parallel secondary shaft two gears are built-in meshing on relevant gears, one of which is fixed to the driving shaft the other being coaxial and free to rotate on the driven shaft to which, however, it can be blocked by means of the multidisc clutch R. In this case the other multidisc clutch D must be disengaged allowing the motion to be transmitted with the reduction ratio required to obtain the I, II and III speeds. The reverse speed is obtained by means of a sprocket gear sliding on a parallel axis pivot in order to mesh two other facing gears built-in on the driven shaft and on the secondary shaft.

This last solution (n.3) is of course empolyable also in the case of the transverse engine layout assuming the shape indicated for example in Fig.4.

TABLE 1

| SPEED | 1 $\varrho_i$ | 2 $\varrho_i/\varrho_{i+1}$ | 3 $m_{ai}$ | 4 $m_{ai}/m_{ai+1}$ | 5 $m_{ai}-m_{vi}$ | 6 $\varrho_i$ | 7 $\varrho_i/\varrho_{i+1}$ |
|---|---|---|---|---|---|---|---|
| I | 14 | | 1566 | | 1326 | 15 | |
| | | 1,591 | | 1,178 | | | 1,5 |
| II | 8,8 | | 1329 | | 1234 | 10 | |
| | | 1,443 | | 1,056 | | | 1,414 |
| III | 6,1 | | 1259 | | 1213 | 7 | |
| | | 1,356 | | 1,021 | | | 1,414 |
| IV | 4,5 | | 1233 | | 1208 | 5 | |
| | | 1,286 | | 1,010 | | | 1,414 |
| V | 3,5 | | 1220 | | 1205 | 3,5 | |

6

TABLE 2

| PHASE | FLYWHEEL | ACCELERATOR | SPROCKET RM | SPROCKET I | MULTIDISC CLUTCH B | MULTIDISC CLUTCH A | CONICAL CLUTCH C | SPEED |
|---|---|---|---|---|---|---|---|---|
| ENGINE START | IN | OUT | OUT | OUT | OUT | OUT | N | NEUTRAL |
| MANOEUVER | IN | OUT | OUT | IN | OUT | OUT | N | ENGAGEMENT I |
| | IN→OUT | 0→1°STEP | OUT | IN | OUT | OUT | L | I (1°STEP) |
| | OUT | 1°→2°STEP | OUT | IN | OUT | OUT | L | I (2°STEP) |
| | IN | OUT | OUT | OUT | OUT | IN | N | ENGAGEMENT II |
| EXERCIZE | IN→OUT →OUT | 1°STEP →2°STEP | OUT | OUT | IN | IN | L | II 1°STEP→2°STEP |
| | OUT | ANY | OUT | OUT | OUT | OUT | L | III |
| | OUT | ANY | OUT | OUT | IN | IN | H | IV |
| | OUT | ANY | OUT | OUT | IN | OUT | H | V |
| MANOEUVER | IN | OUT | IN | OUT | OUT | OUT | N | ENGAGEMENT RM |
| | IN→OUT →OUT | 1°STEP →2°STEP | IN | OUT | OUT | OUT | L | RM 1°STEP→2°STEP |

Fig. 1 and 2 nomenclature

1-engine shaft
2-gearbox case
3-4-5 ring gears of final drive

6-"differential"

7-8 wheel's transmission shafts

9-output shaft coaxial with the input shaft 1

10-11 gears built-in on shaft 9

12-spline

13-flange conjugated with 12

14-bearing on case 2

15-16 pinions

17-18 flanges conjugated with double flange 13

19-20 discs 21-22 radial an axial roll bearings

23-24 Hydraulic pistons

25-26 springs

27-28 sealed oil chamber

29-oil channel feeding bearing 14

30-carrier

31-pivots on 30

32-twin sprockets on 31

33-gear

34-rolls

35,36,37 conical surfaces on carrier 30 and wheel 33

38-flywheel

39- drum bolted on case 2

40- external wall of case2

41-roll bearing

42-ball bearing maintaining coaxial shafts 1 and 9

43-hydraulic piston

44-extension of piston 43

45-ball bearing

46-bending spring

47-48 oil chambers

49-diaphragm spring

50-bracket

51-hydraulic piston

52-ball bearing

53-oil chamber

54-oil channels

55,56,57-sprocket gears

58-Fork

59-sliding bolt

60- double fork

61-lever

A,B-multidisc clutch

C-conical clutch

N,L,H-conical clutch positions (N = neutral, L = low speed, H = high speed

## Claims

1 - Transmission system particularly for motor vehicles, characterized by the fact that in at least two gears, preferably the top gears (IV and V), a "direct drive" is fitted between the input and output shafts of the gearbox practically by-passing the gearbox so that only a couple of meshing gears of the final drive are working resulting in a very high transmission efficiency.

2 - Transmission system, preferably following the preceding claim, characterized by the fact that the main bearing of the pinions fitted on the input shaft of the final drive is fluid-dynamic.

3- Transmission system following the preceding claims characterized by the adoption of a damping joint between the engine shaft and the input shaft of the gearbox, located in a spot far from the heat generated especially by the friction elements.

4 - Transmission system following at least one of the preceding claims characterized by a particularly compact configuration in the shaft axis direction allowing for an ease installation of a 5 or even 6 cylinders-in-line engine when a transverse (front) drive layout is adopted.

5 - Transmission system following at least one of the preceding claims, equipped with the so called "power shift" changing gear device.

6 - Transmission system following at least one of the preceding claims including a detachable flywheel (39) i.e. a flywheel that can be disengaged from the engine shaft at least in some conditions characterized by the fact that, the transmission being activated, the vehicle itself, or a generic utilizer of the power fed by the engine, assures the desired regular rotation of the engine shaft.

7 - Transmission system, preferably following at least one of the preceding claims, equipped with a detachable flywheel accelerated by a small starting motor in order to start the engine when the flywheel is engaged again to the shaft.

8 - Transmission system, particularly for motor vehicles, basically as shown and described.

LMN

FIG.1

XYZ

FIG.2

DRIVING WHEELS

DIFFERENTIAL

III – V

II – IV

RM – I

E

N

I

G

A

B

T

R

I-II-III-RM ⊗ JOINT

RM

D

IV – V

FLYWHEEL

N° 3

M

TRANSMISSION
SHAFT

⊗ JOINT

EPICYCLIC
GEAR

N° 1

RM

I – II – III

IV – V

FLYWHEEL

ENGINE

F₁

F₂

C₁

C₂

N° 2

M

FIG. 3

D  IV-V    R  I-II-III- RM

T    M

RM

FLYWHEEL

FIG. 4